(19) Europäisches Patentamt
European Patent Office
Office européen des brevets

(11) **EP 2 394 151 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(21) Anmeldenummer: **10722525.2**

(22) Anmeldetag: **05.02.2010**

(51) Int Cl.:
*G01L 3/10* (2006.01)     *B62M 3/08* (2006.01)
*G01L 3/24* (2006.01)     *A63B 24/00* (2006.01)
*B62M 6/50* (2010.01)

(86) Internationale Anmeldenummer:
**PCT/DE2010/000121**

(87) Internationale Veröffentlichungsnummer:
**WO 2010/088888 (12.08.2010 Gazette 2010/32)**

(54) **VORRICHTUNG ZUR MESSUNG UND ERMITTLUNG DER KRAFT, DER MOMENTE UND DER LEISTUNG AN EINER KURBEL, INSBESONDERE DER TRETKURBEL EINES FAHRRADES**

APPARATUS FOR MEASURING AND DETERMINING THE FORCE, THE TORQUE AND THE POWER ON A CRANK, IN PARTICULAR THE PEDAL CRANK OF A BICYCLE

DISPOSITIF DE MESURE ET DE DÉTERMINATION DE LA FORCE, DES COUPLES ET DE LA PUISSANCE SUR UNE MANIVELLE, EN PARTICULIER SUR UNE MANIVELLE DE PÉDALIER D'UNE BICYCLETTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.02.2009 DE 102009001463**

(43) Veröffentlichungstag der Anmeldung:
**14.12.2011 Patentblatt 2011/50**

(73) Patentinhaber: **Momes GmbH**
**69469 Weinheim (DE)**

(72) Erfinder:
• **BIERMANN, Michael**
**64289 Darmstadt (DE)**

• **ASFOUR, Jean-Michel**
**69649 Weinheim (DE)**

(74) Vertreter: **Koelle, Alexander**
**Wolfratshauser Strasse 243**
**81479 München (DE)**

(56) Entgegenhaltungen:
**DD-A5- 294 673          DE-A1- 4 435 174**
**DE-A1-102005 027 181**

• **anonymous: "Picostrain" 5. Juli 2007 (2007-07-05), XP002592877 Gefunden im Internet: URL:http://web.archive.org/web/20070705144 255/www.acam-usa.com/Content/English/picos train/ps.html [gefunden am 2010-07-21]**

## Beschreibung

Die Erfindung betrifft eine Vorrichtung zur Messung und Ermittlung der Kraft, der Momente und der Leistung an einer Kurbel, insbesondere der Tretkurbel eines Fahrrades, bestehend aus einem Auswertegerät, insbesondere einem Fahrradcomputer, und wenigstens einem Pedal, wobei an einem Verformungskörper im Pedal Dehnmessstreifen angebracht sind. Die genauesten Messergebnisse lassen sich aber mit einem linken und einem rechten Pedal erzielen.

## Stand der Technik

Bekannt ist bereits aus DE 37 22 728 C1 eine Vorrichtung, die Tretkräfte am Tretlager mittels der Verformung eines geeigneten Biegelements, auf dem Dehnmessstreifen angebracht sind, erfasst, in ein elektrisches Signal umwandelt und zusammen mit der Winkelgeschwindigkeit der Kurbel in einem Mikrocomputer, insbesondere einem Fahrradcomputer, verarbeitet, um daraus die Leistung zu errechnen. Die Dehnmessstreifen werden ferner zu einer Wheatstone-Brücke verschaltet. Hierbei wird auf Grund konstruktiver Maßnahmen nur der tangentiale Anteil der Kraft, also das Drehmoment an der Kurbel erfasst. Eine Kraftkomponente in einer anderen Richtung, etwa in radialer Richtung wird mittels des die Dehnmessstreifen tragenden Verformungselementes nicht erfasst und kann damit nicht gemessen werden. Der Bereich des Tretlagers dient hier als Summierstelle für die Drehmomente von linker und rechter Tretkurbel. Erst von dieser Stelle wird die Kraft über Dehnmessstreifen zum Kettenblatt geleitet. Mit der separat gemessenen Trittfrequenz kann die Leistung berechnet werden. Nachteil dieser Lösung ist, dass immer die Kraft beider Beine gemessen wird. Es ist somit keine Möglichkeit gegeben, den Tretzyklus im Sinne der Vergleichmäßigung des Beitrags der einzelnen Beine zu optimieren. Die Genauigkeit ist dadurch reduziert, dass die über die Dehnmessstreifen geleiteten Momente die Reibanteile aus Pedalen und Tretlager enthalten. Es sind spezielle Messkurbeln erforderlich, die mit der übrigen Fahrradausstattung kompatibel sein müssen.

Aus US 2007/0170688 A1 ist eine Vorrichtung und ein System zur Überwachung, Analyse und Anzeige der vom Fahrradfahrer während der Fahrt auf die Pedale aufgebrachten Kraft. Dazu ist eine Messnabe im Hinterrad vorgesehen, bei der das am Zahnkranz entstehende Moment aus der Kettenzugkraft über eine Hülse im Inneren des Nabenkorpus erst auf der anderen Nabenseite ausgeleitet wird. Das durchgeleitete Torsionsmoment verformt die Hülse und wird per Dehnmessstreifen ausgewertet. Mit dem so gewonnenen Moment lässt sich zusammen mit der separat gemessenen Winkelgeschwindigkeit die Leistung errechnen. Nachteil dieser Lösung ist ebenfalls, dass auf diesem Weg die Summe der Beinkräfte gemessen wird und eine genaue Auswertung der einzelnen Beinbeiträge nicht möglich ist. Die Genauigkeit der eingebrachten Leistung ist um die Größen Kettenwirkungsgrad sowie der Pedal- und Tretlagerreibung reduziert. Die wahre eingespeiste Leistung ist daher größer als die gemessene Leistung. Ferner ist eine Messnabe in das Hinterrad einzuspeichen oder ein entsprechendes Komplettrad in das Rad einzusetzen. Der Wechsel zwischen verschiedenen Fahrrädern ist so einfach wie der Radumbau. Die Anschaffungskosten sind durch die mindestens erforderliche Einspeichung relativ hoch.

Aus EP 0 909 940 A2 ist ein Verfahren und eine Vorrichtung zur Messung der Leistung und zur Messung der Zugkraft und der Schwingfrequenzen einer schwingenden Kette, z.B. einer Fahrradkette, bekannt. Über das Prinzip der Saitenschwingung wird ausgenutzt, dass das unter Zugkraft stehende Obertrum einer Kette der Zugkraft proportionale Schwingfrequenzen zeigt, welche über die Rückwirkung der schwingenden Kette auf ein Sensor-Magnetfeld gemessen werden können. Bei Kenntnis von Kettengewicht pro Meter und freier Kettenlänge lässt sich die Kettenkraft ermitteln bzw. zurückrechnen. Zusammen mit einem Sensor für die Kettengeschwindigkeit am Schaltwerk eines Fahrrades kann die Leistung an der Kette ermittelt werden. Nachteil dieser Lösung ist ebenfalls, dass die Summenkraft beider Beine erfasst wird und eine genaue Auswertung der einzelnen Beinbeiträge nicht möglich ist. Bestensfalls ist aus einem Vergleich des Kraftwirkungssigniäls mit dem zugehörigen Winkelsignal identifizierbar, ob gerade das linke oder rechte Bein in einer Phase überwiegenden Leistungsbeitrags ist. Eine genaue Bestimmung ist nicht möglich, da auch in der jeweiligen Hochlastphase des einen Beins das andere Bein einen (positiven oder negativen) Anteil an der gemessenen Leistung hat. Die Genauigkeit ist um die Wirkungsgrade von Pedal, Tretlager und Kette reduziert. Nachteilig ist noch dazu, dass die Rückrechnungsformel die Kenntnis der Parameter Kettentrumlänge (Achsabstand Kettenblatt-Zahnkranz), Kettengewicht (ein Vielfaches des Kettengliedgewichtes) und Schwingfrequenz erfordert. Durch die Abhängigkeit der Kettenkraft von den Variablen Kettengewicht, Kettenlänge und Schwingfrequenz ist diese im Allgemeinen stark mit Fehlern behaftet, da sich die Beiträge der ermittelten, fehlerbehafteten Werte nach dem Fehlerfortpflanzungsgesetz im ungünstigsten Fall aufsummieren. Ein maßgeblicher Einfluss ist vor allem durch das Kettengewicht gegeben, welches im Rahmen der Annahmen darüber, welchen Anteil eines Kettengliedes man dem Trumgewicht noch zurechnet, schwankt. Desweiteren ist die Magnetfeld-Sensorik sorgfältig zu positionieren, da sonst die Frequenzmessung stark fehlerbehaftet ist. Es ist insgesamt ein sehr hoher Justageaufwand notwendig.

Aus EP 0 954 746 B1 ist ein Verfahren zur Bestimmung des auf einen um eine Drehachse drehbar antreibbaren Rotationskörper, insbesondere auf die Tretlagerwelle eines Fahrrades, ausgeübten Drehmoments bekannt. Dabei wird ein als Messeinheit ausgeführtes Tretlager verwendet, bei der durch die Kraftwirkung des linken Beines die Tretlagerwelle eine Torsionsverformung erfährt. Das linke Ende der Tretlagerwelle eilt demnach dem rechten Ende vor. Der Torsionswinkel und damit das einwirkende Moment der Welle werden über dort angebrachte, radial angeordnete Rasterscheiben optoelektronisch erfasst. Zur Bestimmung der eingebrachten Leistung wird die Wellendrehzahl über die Impulsfolge einer Rasterscheibe ermittelt und mit dem Moment verrechnet. Die Einheit ist baulich kompakt. Nachteil dabei ist, dass sich die ermittelte Leistung allein auf das linke Bein bezieht. Ist das rechte Bein in der Druckphase und leistet das linke Bein nur einen geringen Beitrag, kann das System nur eine geringe Verformung und damit eine scheinbar nur geringe Leistung messen. Andererseits ist die Genauigkeit der eingebrachten Leistung nur um die einfache Pedal- und halbe Tretlagerreibung reduziert, wodurch das System theoretisch relativ genau ist. Deswegen ist die tatsächlich eingebrachte Leistung ist also nur geringfügig größer als die gemessene Leistung. Allerdings muss der Beitrag des anderen Beins als gleichgroß angenommen werden, wenn die Leistung des gesamten Tretzyklus ermittelt und berechnet werden soll. Ferner benötigt das System eine optimale Vorbereitung des Tretlagergewindes und eine extrem sorgfältige Montage hinsichtlich des Anzugsmoments.

Aus US 7,377,180 B2 und US 7,387,029 B2 sind Messsysteme bekannt, die nicht die eingespeisten Kräfte messen, sondern die zu überwindenden Fahrwiderstände, die nach dem dritten Newtonschen Axiom gleich groß sein müssen. Die Einzel-Fahrwiderstände aus Steigung, Massenträgheit, Roll- und Luftwiderstand werden mittels entsprechender Sensoren ermittelt und in der Leistungsgleichung umgerechnet. Durch eine Erfassung der Beschleunigung über Grund und der Gesamtbeschleunigung lässt sich der Steigungswinkel ermitteln. Bei gemessenem Gesamtgewicht ergeben sich daraus Beschleunigungs- und Steigungswiderstand. Mit der Messung des dynamischen Strömungsdrucks und der Hinzunahme von Umgebungsgrößen (Luftdichte aus Temperatur) wird die Luftgeschwindigkeit bestimmt. Bei einem bekannten Luftwiderstandsfaktor kann daraus die aerodynamische Luftwiderstandskraft berechnet werden. Der Luftwiderstandsfaktor wird für die typische Fahrerhaltung durch eine Kalibrierfahrt (Ausrollen) ermittelt. Aus der Kalibrierfahrt ergibt sich auch der Rollwiderstand. Nachteil dieser Messsysteme ist, dass sich hier naturgemäß lediglich die Gesamtleistung ermitteln lässt und eine Aufteilung in Informationen über beide Beine messtechnisch nicht möglich ist. Darüber hinaus ist nachteilig, dass die Luftwiderstandsmessung erheblichen Störgrößen (z.B. Windschattenfahrt, Seitenwind) ausgesetzt ist und dadurch die Genauigkeit leidet.

Aus DIE 44 35 174 C2 ist eine Vorrichtung zur Messung der Kraft und Leistung an einer Tretkurbel, insbesondere der eines Fahrrades, bekannt, bei der die Größen Kraft und Winkelgeschwindigkeit in elektrische Signale umgewandelt und einem Auswertegerät zugeführt werden. Bei diesem Messsystem werden die Kräfte über einen Kurbelzapfen erfasst, der in die Kurbel eingeschraubt wird und in der Nähe der Einschraubstelle am Umfang mit Dehnmessstreifen versehen ist, wobei durch deren paarweise 45°-Anordnung Schubverformungen gemessen werden können. Daraus lässt sich unmittelbar die einwirkende Querkraft ermitteln, ohne dass Momente aus Fehlhebeln, Kräfte in Pedalachsrichtung oder der Lasteinleitungspunkt eine Rolle spielen. Durch eine Anordnung der Dehnmessstreifen in einer Ebene 90° versetzt dazu lässt sich dann auch eine zweite Kraftkomponente messen. Die Kurbelwinkelstellung wird über eine Laufzeitmessung des Trittfrequenzgebers bestimmt. Durch die Messung der Trittfrequenz mittels eines Geberkontakts an der Kurbel kann die Leistung berechnet werden. Mit dieser Anordnung kann die Gesamtkraft, die auf das Pedal aufgebracht wird, mit zugehörigem Winkel ermittelt werden. Eine Kräftezerlegung der Radial- und Tangentialkomponenten zur Kurbel ist möglich. Da die Winkelposition Dehnmessstreifen relativ zur Kurbel nicht justiert werden kann, soll der Einschraubwinkel der Pedalachse soll durch eine Kalibriermessung mit senkrecht wirkender Kraft in einer bekannten Winkelstellung (Kraftrichtungskalibration) oder durch eine direkte Messung des Winkels mit manueller Eingabe (Positionswinkelmessung der Achse) erfolgen. Die Lösung erlaubt zwar ein getrenntes Bestimmen der Kräfte auf dem linken und rechten Pedal, eine Gewinnung weiterer Informationen, wie z.B. an der Achse wirkende Axialkräfte oder Torsionsmomente sind durch dieses Messsystem und diese Messanordnung nicht möglich. Eine jede weitere gewünschte Information würde eine zusätzliche Verkabelung als Wheatstone-Brücke erfordern, was praktisch nicht sinnvoll ist.

Aus DD 294 673 A5 ist ein instrumentiertes Fahrradpedal mit einem Pedalkorpus, einer Pedalachse und einem Verformungskörper bekannt. Der Verformungskörper ist fest am Pedalkorpus und drehbar auf der Pedalachse gelagert. Nachteilig an diesem Fahrradpedal ist, dass der Verformungskörper in dem Pedal auch sehr viel Raum einnimmt und benötigt. Ferner funktioniert der Verformungskörper nach dem (Doppel-)Biegebalken- und Biegestegenprinzip, wodurch sich auch der hohe Platzbedarf in dem Pedal ergibt und erklärt.

Nachteil der meisten dieser Messsysteme ist, dass eine Messung der Kraftverteilung für beide Beine getrennt nicht möglich ist und/oder dass nicht alle wirkenden Kräfte gemessen werden können.

## Aufgabe der Erfindung

Aufgabe der vorliegenden Erfindung ist es, ein einfach zu montierendes Messsystem auszubilden, welches in der Lage ist, die Kraftverteilung für beide Beine getrennt in der Zerlegung tangential und radial zur Kurbel, als Funktion des Kurbelwinkels zu ermitteln. Ferner sollen beliebig andere Kraftwirkungen, beispielsweise die Pedalkraftresultierende und deren Wirkwinkel sowie die Axialkraft oder die Torsionsmomente bezüglich der Pedalachse für beide Beine getrennt ermittelt werden können. Die abgegebene Leistung soll für beide Beine getrennt sowie auch als Summenleistung beider Beine ermittelt werden können. Aufgabe der vorliegenden Erfindung ist ferner, eine vereinfachte Auswertung sowie eine einfachere Verkabelung und Verschaltung zu ermöglichen.

## Lösung

Die Aufgabe wird nach der vorliegenden Erfindung dadurch gelöst, dass die Größe Kraft durch die Messung der Verformung eines Verformungskörpers, der auf der Pedalachse und innerhalb des Pedalkorpus drehbar gelagert ist und der relativ zum Pedalkorpus steht und auf dem vier Paare einander zugeordneter Dehnmessstreifen in unterschiedlichem Winkel angeordnet sind, ermittelt wird, insbesondere durch eine Messung der Einzelnormaldehnungen der Dehnmessstreifen. Der Kraftfluss vom Pedalkorpus über die Fügestelle zum Verformungskörper bis zum Einschraubgewinde der Pedalachse erfolgt vollständig über diese Dehnmessstreifen.

## Erreichte Vorteile

Das Messsystem besteht aus nur drei bzw. vier Baugruppen, einem Pedal oder zwei Pedalen, einem Geschwindigkeitsmesser und einer Auswerteeinheit, beispielsweise einem Fahrradcomputer. Eine weitere Verkabelung und weitere Sensoren, wie z.B. Kurbelwinkelgeber bei anderen Messsystemen, sind nicht erforderlich. Clips und Kabelbinder entfallen. Das Messsystem kann die Größen Horizontal-, Vertikal- und Axialkraft auf dem Pedal, das Verlustmoment des Pedallagers, den Kurbelwinkel, den Pedalneigungswinkel und die Fahrbahnsteigungswinkel erfassen ohne dabei die Nachteile des Standes der Technik aufzuweisen. Mit den gemessenen Daten lassen sich die nachfolgend genannten Hauptinformationen gewinnen, die in keiner bisherigen Lösung, insbesondere im mobilen Einsatz, entweder überhaupt oder in diesem besonderen Verhältnis von Informationsgehalt, Bauraum, Integriertheit und prinzipbedingter Genauigkeit geliefert werden können:

1. Kurbelwinkel und alle zeitlichen Ableitungen daraus, wie z.B. Winkelgeschwindigkeit
2. Kraftverteilung für beide Beine getrennt in der Zerlegung tangential und radial zur Kurbel, ermittelt als Funktion des Kurbelwinkels, sowie beliebige Kraftwirkungen, wie z.B. Pedalkraftresultierende und deren Wirkwinkel
3. Axialkraft bezüglich der Pedalachse für beide Beine getrennt
4. Pedallagerverluste für beide Seiten getrennt
5. Abgegebene Leistung für beide Beine getrennt
6. Abgegebene Summenleistung beider Beine

Aus den gewonnen Daten über Tangential-, Radial- und Axialkraft und dem Pedalneigungswinkel wird es erstmalig möglich sein, neben anderen Informationen insbesondere solche zum Thema Sprintleistung, Sprintqualität zu generieren.

Ein wesentliches Merkmal der Erfindung ist die Applikation der Dehnmessstreifen zur Messung der Einzelnormaldehnungen auf einem Verformungskörper, weil u.a. damit der Nachteil einer Anbringung der Dehnmessstreifen auf der Pedalachse und damit das Problem wie die Ausleseund Verarbeitungseinheit über die Einschraubstelle hinweg kontaktiert wird, vermieden wird. Da der Verformungskörper relativ zum Pedalkorpus still steht, können die Leitungen zur Ausleseund Verarbeitungseinheit im Pedalkorpus kurz gehalten werden, wodurch Einflüsse von Störgrößen vermieden wird. Aufgrund der Rotationssymmetrie des Verformungskörpers ist die Qualität der Verformungsmessungen und hinsichtlich der Querkraftkomponenten in alle Raumrichtungen naturgemäß gleich gut.

Ein weiterer Vorteil wird darin gesehen, dass das System auch mit nur einem Pedal zur Messung betrieben werden kann, wobei dann die ermittelten Werte eines Pedals symmetrisch verteilt angenommen an die Auswerteeinheit, insbesondere den Fahrradcomputer, übermittelt werden.

Die Auswertung der Dehnmessstreifen erfolgt nicht mittels einer (vollen) Wheatstone-Brücke, sondern mittels Time-to-Digital-Converter (TDC), die eine besonders platzsparende und energieeffiziente Ausführungsform der Signalgewinnung darstellen. TDC-Schaltungen bestimmen die Einzeldehnungen von Dehnmessstreifen über das Ermitteln eines Zeitverhältnisses und nicht wie Wheatstone-Brücken, die die gewünschte Kraft aus dem Spannungsverhältnis $U/U_s$ (U Brückenspannung, $U_s$ Speisespannung) direkt durch den Messvorgang ermitteln und diese zur Digitalisierung an einen Analog-to-Digital-Converter (ADC) weiterleiten. Bei TDC-Schaltungen folgt die für die interessierende Kraft erforderliche algebraische Verknüpfung dann aus einer nachgeschalteten Berechnung, beispielsweise einem Mikrocontroller. Weitere Verschaltungen sind nicht erforderlich. Die TDC-Schaltungen verschalten Dehnmessstreifen in einen Schwingkreis (RC-Glied), dessen Entladedauer vom TDC gemessen wird und die ein Maß für den elektrischen Widerstand des Dehnmessstreifen im RC-Glied ist. Wenn dies für zwei Dehnmessstreifen durchgeführt wird, so kann ein Zeitverhältnis v definiert werden, womit die Messung von Widerstand auf die Messung von Zeit zurückgeführt ist. Die Zeitmessung ist extrem präzise möglich (im pico-sek-Bereich) und bedeutet andererseits, dass für die Aufbereitung der Primärgröße "Widerstand" keine Energie aufgewendet werden muss. Die Platz- und Energieeffizienz lässt sich durch eine weitere Ausführungsform eines TDC-Bausteins steigern, welcher mindestens vier TDC-Kanäle enthält, sowie einen Mikrocontroller, der die weitere digitale Verarbeitung, Berechnungen und Signalübertragung, ebenfalls ermöglicht.

Ob dem TDC nachgeschaltet oder integriert kann die Berechnung abgeleiteter Daten bereits in dem Pedal vorgenommen werden, was die Auswerteeinheit, z.B. den Fahrradcomputer, hinsichtlich Energieverbrauch entlastet.

Weiterer Vorteil der Verwendung eines Verformungskörpers zur Anbringung des Dehnmessstreifen ist, dass eine Koordinatentransformation bei der Auswertung entfällt, da sich der Verformungskörper im Koordinatensystem eines Fahrradrahmens nicht dreht.

Durch die Verwendung von TDC entfällt die Notwendigkeit die DMS zu (vollen) Wheatstone-Brücken zu verschalten. Dadurch wird die Verkabelung vereinfacht.

Bei einer weiteren vorteilhaften Ausführungsform werden sämtliche Messdaten drahtlos an das Auswertegerät 17 übertragen.

In der Zeichnung zeigt:

Fig. 1 ein Systemschaubild mit einem Fahrradcomputer (FC) als Auswertegerät 17 und einem linken und einem rechten Pedal, wobei nach den Dehnmessstreifen ein Time-to-Digital-Converter (TDC), dort noch als Resistor-to Digital-Converter (RDC) bezeichnet, angeordnet ist und wobei die Begriffe RDC und TDC aber als Synonyme verwendet werden

Fig. 2 eine Seitenansicht der Kurbel 20 mit dem Pedal 16 unter Darstellung der Winkellagen in Abhängigkeit von der Erdoberfläche und der Fahrbahn

Fig. 3 eine Koordinatentransformation bezüglich der Anordnung der Dehnmessstreifen

Fig. 4 eine Seitenansicht eine Seitenansicht der Kurbel 20 mit dem Pedal 16 unter Darstellung der wirkenden Kurbelkräfte

Fig. 5 einen Querschnitt durch das Pedal 16, bestehend aus einem Pedalkorpus 11, einem Verformungskörper 9, einem Triggerelement 14, einer Pedalachse 10, zwei Lagern 13 und einem Winkelgeber 12

Fig. 6 einen Querschnitt (Vorderansicht) durch den Pedalkorpus 11 unter Darstellung der Ausgestaltung der Dehnmessstreifen auf dem Verformungskörper 9

Fig. 7 einen Querschnitt (Seitenansicht) durch den Pedalkorpus 11 unter Darstellung der Ausgestaltung der Dehnmessstreifen auf dem Verformungskörper 9

Fig. 8 die Vorzeichen der Schubverzerrung sowohl der zugewandten als auch der abgewandten Seite infolge Belastungen $F_s$ und $M_z$ in die positiven Koordinatenrichtungen

Fig. 9 die Einfach-V- und die Doppel-V-Anordnung von Dehnmessstreifen

Im Folgenden wird anhand der Zeichnungen ein Ausführungsbeispiel der Erfindung im Detail beschrieben:

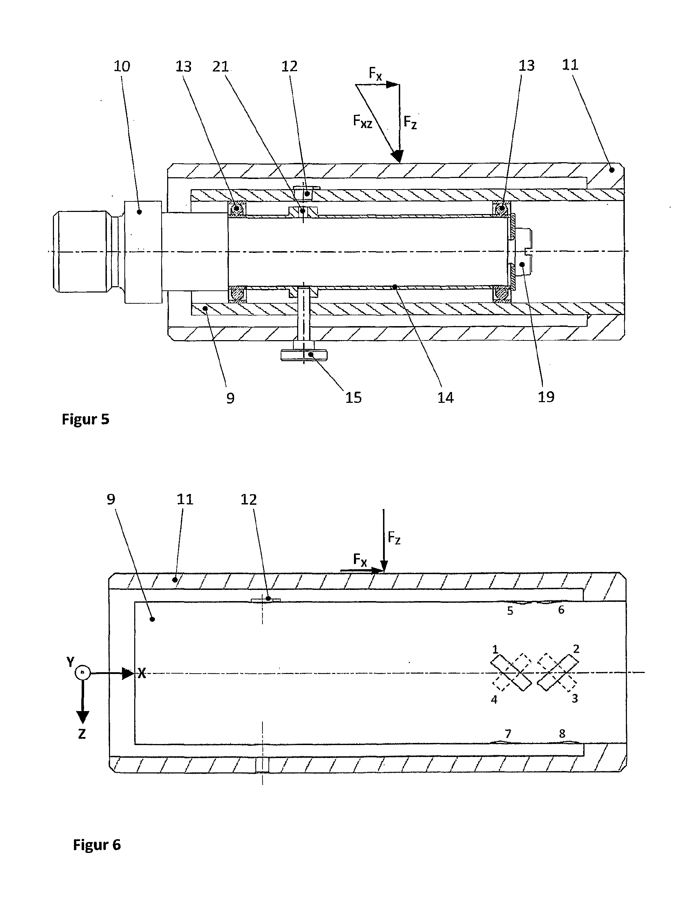

Fig. 5 zeigt ein Pedal 16 bestehend aus einem Pedalkorpus 11, einem Verformungskörper 9, einem Triggerelement 14, einer Pedalachse 10, zwei Lagern 13, einer Feststellschraube 19 und einem Winkelgeber 12. Das linke und rechte Pedal 16 sind identisch aufgebaut. Es wird daher nur ein Pedal messtechnisch und im Aufbau beschrieben. Der Verformungskörper 9 ist auf der Pedalachse 10 an zwei Stellen drehbar gelagert. Die Dehnmessstreifen 1-8 sind auf dem überkragenden Teil appliziert, der den Verformungskörper 9 mit dem Pedalkorpus 11 verbindet. Der Kraftfluss vom Pedalkorpus 11 über die Fügestelle zum Verformungskörper 9 bis zum Einschraubgewinde der Pedalachse 10 - also alle auf den Pedalkorpus 11 wirkenden Kräfte und Momente - erfolgt unverzweigt und vollständig über die Dehnmessstreifen.

Es kommen 4 Paare zugeordneter Dehnmessstreifen 1-8 unter einem Lagewinkel von ±45° zur Pedalachse 10 zur Anwendung, von denen sich je zwei Paare am Umfang des Verformungskörpers 9 gegenüberliegen. Zwei gegenüberliegende Paare dienen zur Ermittlung der Querkraftkomponente senkrecht zu der Ebene, die die Paare verbindet und weil die Dehnmessstreifen-Paare in zwei senkrecht zueinander stehende Ebenen appliziert sind, von denen eine die Trittplattenebene ist, können so die Vertikal- und Horizontalkomponenten auf die Trittplatte des Pedalkorpus 11 bestimmt werden. Die Wahl eines Lagewinkels von ±45° zur Pedalachse ergibt dabei die größten Dehnungssignale, was im Sinne größtmöglicher Auflösung anzustreben ist. Diese Anordnung hat den bekannten Vorzug, auf den Verformungskörper 9 einwirkende Biegemomente, gleich welcher Herkunft, durch die Mittelwertbildung der daraus resultierenden Zug- und Druckspannung innerhalb des Dehnmessstreifen, verschwinden zu lassen.

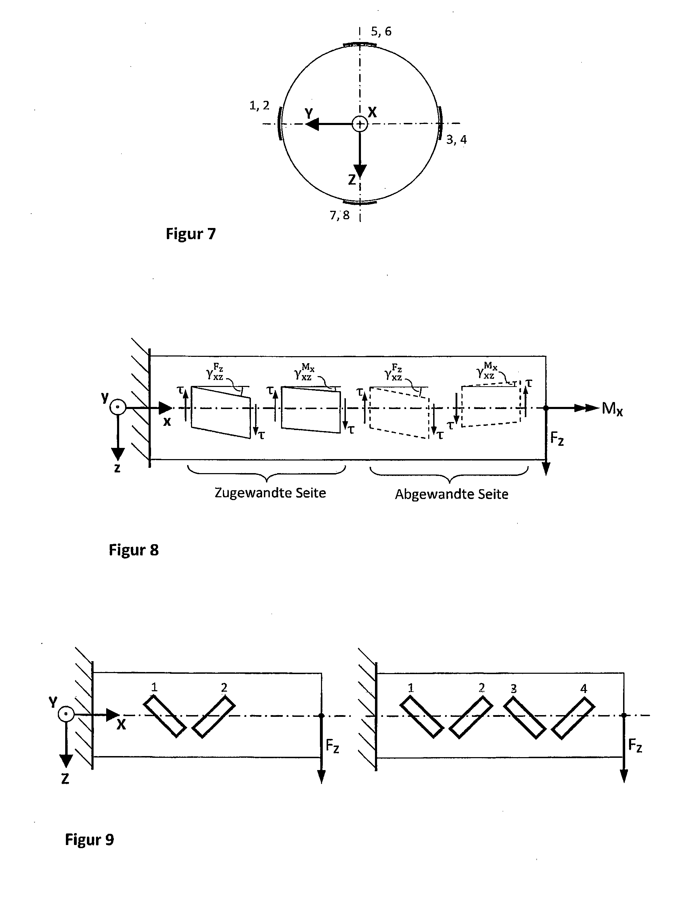

Insbesondere die x-förmige Anordnung der gegenüberliegenden Dehnmessstreifen-Paare 1-4, vgl. Figur 6, bietet die Möglichkeit, bei geeigneter algebraischer Verknüpfung der gemessenen Dehnungen über die genannten Querkraftkomponenten (vertikal und horizontal) hinaus auch die Axialkraft und das Verlustmoment an der Pedalachse 10 separieren zu können. Zur reinen Querkraftermittlung sind z.B. auch einseitig applizierte Einfach-V- oder auch Doppel-V-Anordnungen geeignet. Dies ist in Figur 9 gezeigt und dargestellt.

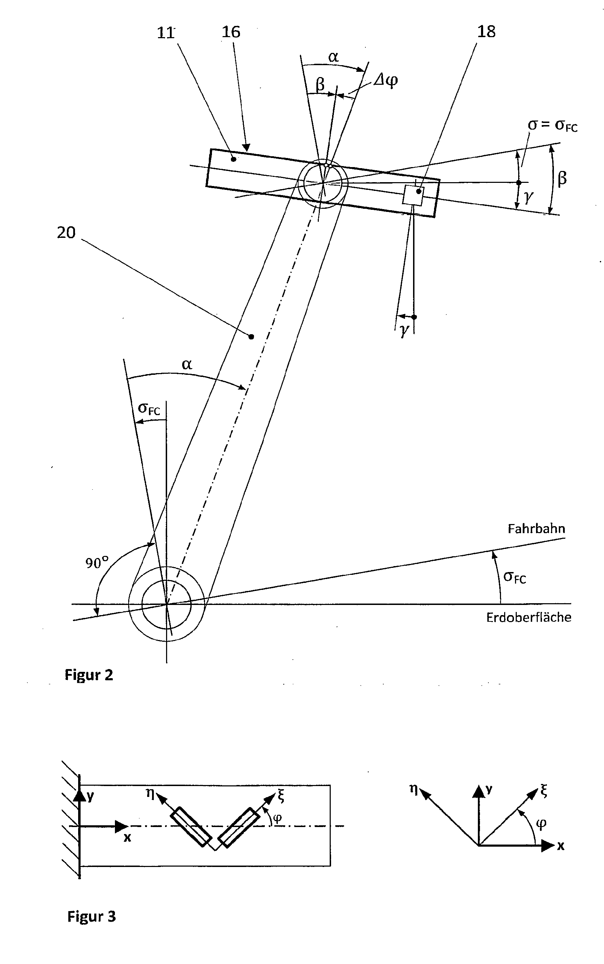

Die Rückrechnung der Verzerrungen $\varepsilon_x, \varepsilon_y, \gamma_{xy}$ aus Dehnungen $\varepsilon_\xi, \varepsilon_\eta$ die unter 45° zur Pedalachse 10 gemessen wurden, ergibt sich aus einer Koordinatentransformation der gegeneinander gedrehten Koordinatensysteme (vgl. Figur 2):

$$D^{\xi\eta} = T \cdot D^{xy} \cdot T^T$$

hierin ist

$$D^{xy} = \begin{bmatrix} \varepsilon_x & \tfrac{1}{2}\gamma_{xy} \\ \tfrac{1}{2}\gamma_{xy} & \varepsilon_y \end{bmatrix} \qquad D^{\xi\eta} = \begin{bmatrix} \varepsilon_\xi & \tfrac{1}{2}\gamma_{\xi\eta} \\ \tfrac{1}{2}\gamma_{\xi\eta} & \varepsilon_\eta \end{bmatrix} \qquad T = \begin{bmatrix} \cos\varphi & \sin\varphi \\ -\sin\varphi & \cos\varphi \end{bmatrix}$$

$D^{xy}$   : Verzerrungstensor im $x,y$-Koordinatensystem
$D^{\xi\eta}$   : Verzerrungstensor im $\xi,\eta$-Koordinatensystem
$T$     : Drehmatrix (Transformationsmatrix)
$T^T$   : transponierte Drehmatrix

Die interessierenden Dehnungskomponenten von $D^{\xi\eta}$ lauten ausgeschrieben für $\varphi = 45°$:

$$\varepsilon_\xi = \tfrac{1}{2}(\varepsilon_x + \varepsilon_y) + \tfrac{1}{2}\gamma_{xy} \qquad \text{und} \qquad \varepsilon_\eta = \tfrac{1}{2}(\varepsilon_x + \varepsilon_y) - \tfrac{1}{2}\gamma_{xy}$$

Diese Zusammenhänge müssen für jeden applizierten Dehnmessstreifen 1-8 unter Beachtung der Vorzeichen der Verzerrungen angeschrieben werden, d.h. welche Richtung die Verzerrungen $\varepsilon_x, \varepsilon_y, \varepsilon_{xy}$ durch die gesuchten Belastungen (Querkraft, Axialkraft, Verlustmoment) annimmt. Die Schubverzerrung $\gamma_{xy}$ setzt sich infolge Querkraft und Torsionsmoment zusammen aus $\gamma_{xy}^P$ und $\gamma_{xy}^M$.

Die Normaldehnung $\varepsilon_x$ setzt sich aus den Axialkraft- und den Biegemomentanteilen $\varepsilon_x^{Fx}$ und $\varepsilon_x^{My}$ zusammen, von denen der zweite durch Mittelung innerhalb der Dehnmessstreifen 1-8 verschwindet. Zudem gilt noch $\varepsilon_x + \varepsilon_y = \varepsilon_x - v \cdot \varepsilon_x$ für rein axiale Belastung in x-Richtung.

Übertragen auf das Koordinatensystem der Dehnmessstreifen 1-8 aus Figur 6 ergibt sich unter Berücksichtigung der Vorzeichen der Verzerrungen infolge $F_z$ und $M_x$ aus Figur 8 und $F_x$ aus Figur 6 z. B. für den Dehnmessstreifen 1:

$$\varepsilon_1 = \varepsilon_\xi^I = \frac{1-v}{2}\varepsilon_x^{Fx} + \tfrac{1}{2}(\gamma_{xz}^{Fz} + \gamma_{xz}^{Mx})$$

$\varepsilon_x^{Fx}$    .   : Dehnung infolge Axialkraft $F_x$ (Dehnung aus Biegemoment $M_y$ mittelt sich zu Null)

$\gamma_{xz}^{Fz}$      : Scherung infolge Querkraft $F_z$

$\gamma_{xz}^{Mx}$      : Scherung infolge Torsionsmoment $M_x$ ("Verlust"moment)

$v$     : Querkontraktionszahl

Dies durchgeführt für die Dehnmessstreifen 1-4 lassen sich folgende Informationen gewinnen (analog für die Dehnmessstreifen 5-8):

$$\varepsilon_1 - \varepsilon_2 + \varepsilon_3 - \varepsilon_4 = 2\gamma_{xz}^{Fz} \qquad \Rightarrow \text{Querkraft } F_z$$

$$\varepsilon_1 - \varepsilon_2 + \varepsilon_4 - \varepsilon_3 = 2\gamma_{xz}^{Mx} \qquad \Rightarrow \text{Verlustmoment } M_x$$

$$\varepsilon_1 + \varepsilon_2 + \varepsilon_3 + \varepsilon_4 = 2(1-\nu)\varepsilon_x^{Fx} \qquad \Rightarrow \text{Axialkraft } F_x$$

$$\varepsilon_5 - \varepsilon_6 + \varepsilon_7 - \varepsilon_8 = 2\gamma_{xy}^{Fy} \qquad \Rightarrow \text{Querkraft } F_y$$

Diese vier Gleichungen sind das eigentlich Charakteristische der Erfindung für die Auswertung der Dehnmessstreifen, da sie zeigen, dass die einfache algebraische Verknüpfung der Einzelnormaldehnungen alle vier gesuchten Größen liefert. Während eine Wheatstone-Schaltung nach Stand der Technik mit den Dehnmessstreifen 1-4 nur die erste Größe ($F_z$) ermitteln kann, lassen sich mit nur einer TDC-Verschaltung aus den Dehnmessstreifen 1-4 die ersten drei Größen bestimmen. Dies wird als besonderer Vorteil gesehen.

Die Berechnung der Kraftwirkungen aus den Verzerrungen erfolgt über das Elastizitätsgesetz:

$$F_x = E \cdot A \cdot \varepsilon_x \qquad F_z = G \cdot A_S \cdot \gamma_{xz}^{Fz} \qquad F_y = G \cdot A_S \cdot \gamma_{xy}^{Fy} \qquad M_x = G \cdot W_x \cdot \gamma_{xz}^{Mx}$$

Hierbei sind $A, A_S$ und $W_x$ die spannungsdefinierenden Querschnittsgrößen.

Der Verformungskörper 9 ist, nach dem die Dehnmessstreifen 1-8 appliziert sind, im Pedalkorpus 11 mechanisch eindeutig positionierbar, z.B. durch einen Indexstift 15, der durch eine hinreichend exakte Bohrung im Pedalkorpus 11 und im Verformungskörper 9 geführt wird. Damit ist sichergestellt, die von den Dehnmessstreifen 1-4 aufgespannte x,y-Ebene exakt parallel zur Trittplattenebene zu liegen kommt (vgl. Figur 6 und 7), weswegen keine weiteren Kraftkalibrationen erforderlich werden.

In einer Verschaltung produziert die Anordnung unter ±45° die größten Signale.

Das zur Relativwinkelerfassung zwischen Pedalkorpus 10 und Kurbel 20 erforderliche Triggerelement 14 ist in Figur 5 als Hülse ausgeführt, welche auf einem erhöhten Ring zwei Triggerpunkte in Form radial eingebrachter Bohrungen im 180° Abstand trägt. Damit erfolgen pro Umdrehung zwei Impulse. Der Nullpunkt-Trigger des Triggerelements 14 wird hierbei durch eine Bohrung differierenden Durchmessers besonders ausgestaltet. Durch Relativdrehung der Pedalachse 10 streichen die Triggerpunkte am Relativwinkelsensor 12 vorbei und werden dadurch erfasst, dazu ist der Relativwinkelsensor 12 in geeignetem Abstand zum Triggerring im Verformungskörper 9 fixiert.

Um den Nullpunkt des Triggerelements 14 zur Kurbel 20 festzulegen, ist das Triggerelement 14 mechanisch zu einer beliebigen Stellung der Kurbel 20 auszurichten, z.B. wenn diese lotrecht nach oben zeigt. Die gewählte Stellung ist günstigerweise im Fahrradcomputer 17 fest programmiert. Hierdurch ist - nach Einrichten der Kurbel 20 in diese Stellung und erfolgter Justage des Null-Triggers relativ dazu - keine weitere Eingabe im Fahrradcomputer 17 erforderlich.

Die mechanische Justage auf Kurbelnull erfolgt, indem im ersten Schritt der Indexstift 15 durch den Pedalkorpus 11 und den Verformungskörper 9 bis zum Anstreifen des Triggerrings eingeführt und anschließend die Pedalachse 10 mitsamt dem Triggerelement 14 in die "Durchsteckposition" gedreht wird. Der Indexstift 15 ist nun vollständig einschiebbar wie in Figur 5 gezeigt und zu fixieren. Das Verwechseln mit der Bohrung des Nullpunkt-Triggers 21 ist wegen der unterschiedlichen Bohrungsdurchmesser ausgeschlossen. Der zweite Schritt enthält das Lösen des Triggerelements 14 mittels der angedeuteten Fixierschraube 19. Ist die Kurbel 20 in der definierten Nullposition und die Pedale 16 eingeschraubt, kann z.B. die Trittplattenebene des Pedalkorpus 11 in Horizontalstellung gedreht werden, dabei dreht sich das gelöste Triggerelement 14 mit. Anschließend ist die Fixierschraube 19 wieder festzuziehen, der Indexstift 15 zu entfernen und die Justage abgeschlossen. Diese Justage bleibt solange erhalten, bis die Anordnung einer Zerlegung bedarf, also auch beim temporären Ab- und Anschrauben der Pedale ändert sich die Justage nicht.

Der überstrichene Relativwinkel $\Delta\varphi(t)$ zwischen der Kurbel 20 und dem Pedalkorpus 11, gemessen ab dem Nullpunkt-Trigger 21 berechnet sich aus der Winkelgeschwindigkeit $\omega_{i-1} = \Delta\varphi_{i-1}/\Delta t_{i-1}$ des vorausgehenden Trigger-Abschnitts und der Laufzeit $\Delta t = t - t_{i-1}$ seit dem letzten Triggerpunkt, unter der Annahme, das sich die Winkelgeschwindigkeit im aktuellen Winkelsegment zum vorangegangenen nicht geändert hat, zu:

$$\Delta\varphi(t) = (t - t_{i-1})^0 \cdot \Delta\varphi_{i-1} + \omega_{i-1} \cdot (t - t_{i-1})$$

wobei

$$(t - t_{i-1})^0 = \begin{cases} 0, & t \le t_{i-1} \\ (t - t_{i-1})^0 = 1, & t > t_{i-1} \end{cases}$$

$\Delta\varphi_{i-1}$      180° für das Triggerelement 14 mit zwei äquidistanten Triggerpunkten

$\Delta t_{i-1}$      Laufzeit zwischen den vorausgegangenen Triggern

Bei jedem Überfahren des Nullpunkt-Triggers 21 beginnt die Zeitschreibung aufs Neue. Als weitere Information kann der Relativwinkelgeber 12 die Trittfrequenz $n_{i-1}$ aus der Winkelgeschwindigkeit $\omega_{i-1} = 2 \cdot \pi \cdot n_{i-1}$ liefern.

Der ermittelte Relativwinkel $\Delta\varphi(t)$ zwischen Pedalkorpus 11 und Kurbel 20 ist alleine nicht hinreichend, um die Verläufe von Kräften, Moment oder der Leistung über dem Kurbelwinkel $\alpha$ berechnen zu können. Damit auf externe Kurbelwinkelgeber wegen der zusätzlichen Bauteile verzichtet werden kann, ergibt sich die Kurbelwinkelinformation durch Berechnung aus dem Relativwinkel $\Delta\varphi(t)$, der Pedalneigung y und der Fahrbahnsteigung $\sigma_{FC}$. In der vorliegenden Ausgestaltung ist dazu ein Neigungswinkelsensor 18 im Pedal 16 integriert, welcher die Pedalneigung $\gamma$ gegenüber der Erdoberfläche misst. Weil dieses Signal aber auch die Fahrbahnsteigung $\sigma_{FC}$ enthält, ist ein gleichgearteter, seperater Neigungswinkelsensor ortsfest anzubringen (z.B. im Fahrradcomputer 17 integriert), mit dem die aktuelle Steigung separat gemessen und über die Mikrocontroller, z.B. im Fahrradcomputer, heraus korrigiert wird.

Die folgenden Zusammenhänge sind bezogen auf Figur 2 (positive Winkel rechtsdrehend):

Am Pedalkorpus 11 gilt

$\alpha = \beta - \Delta\varphi$

$\beta$ = Wippwinkel des Pedalkorpus 11 gemessen zur Fahrbahn

und

$\beta = \gamma - \sigma$

ergibt sich $\alpha = \gamma - \sigma_{FC} - \Delta\varphi$ ; $\sigma = \sigma_{PK} = \sigma_{FC}$ und $\Delta\varphi = \Delta\varphi(t)$

Wegen der positiven Drehrichtung für $\alpha$ gilt:

$\sigma = \sigma_{FC} < 0$ bei positiver Fahrbahnsteigung und

$\Delta\varphi < 0$ Pedalkorpus dreht relativ rückwärts bei Vorwärtskurbelbewegung ($\alpha > 0$)

Hierbei ist $\alpha$ der Kurbelwinkel, $\sigma_{FC}$ die Fahrbahnsteigung gemessen am Fahrradcomputer 17, $\gamma$ die Pedalneigung gemessen am Pedal 16. $\Delta\varphi = \beta - \alpha$ ist der Relativwinkel gemessen im Pedal 16. Um $\sigma_{FC}$ am Fahrradcomputer 17 als Korrekturgröße verwenden zu können, ist eine Offsetbestimmung der Einbaulage des Fahrradcomputers 17 erforderlich.

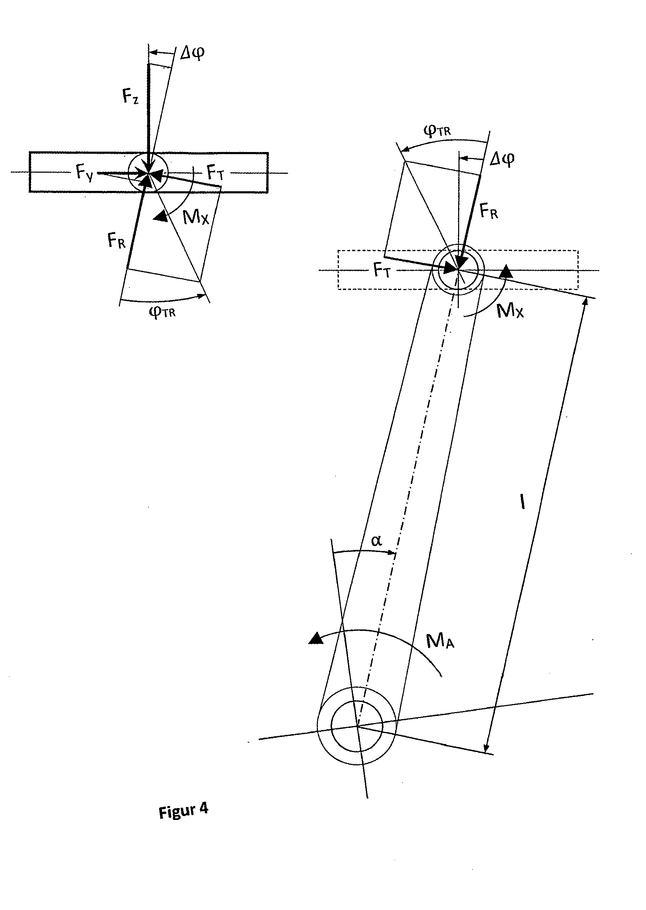

Das vortriebsrelevante Antriebsmoment $M_A$ folgt aus dem Gleichgewicht an der Kurbel 20 (vgl. Figur 4) zu:

$$M_A = F_T \cdot l - M_x ; \qquad\qquad M_x : \text{Verlustmoment am Pedallager}$$

und Kräftegleichgewicht am Pedal 16 (vgl. Figur 4) führt auf:

$$F_T = F_x \cdot \sin \Delta\varphi + F_y \cdot \cos\Delta\varphi \; ; \qquad F_T \qquad : \text{Tangentialkraft an der Kurbel 20}$$

$$F_R = F_x \cdot \cos\Delta\varphi - F_y \cdot \sin\Delta\varphi \; ; \qquad \ddot{F}_R \qquad : \text{Radialkraft an der Kurbel 20}$$

Der Relativwinkel $\Delta\varphi$ zwischen Kurbel 20 und Pedal 16 wird direkt gemessen. Durch die oben beschriebenen Winkelverknüpfungen liegen auch die Kraftverläufe über dem Kurbelwinkel $\alpha$ vor.

Bei Bedarf folgt die Resultierende $F_{TR}$ und deren Wirkwinkel $\varphi_{TR}$ aus (Figur 4).

$$F_{TR} = \sqrt{F_T{}^2 + F_R{}^2} \qquad \text{und} \qquad \tan\varphi_{TR} = F_T / F_R$$

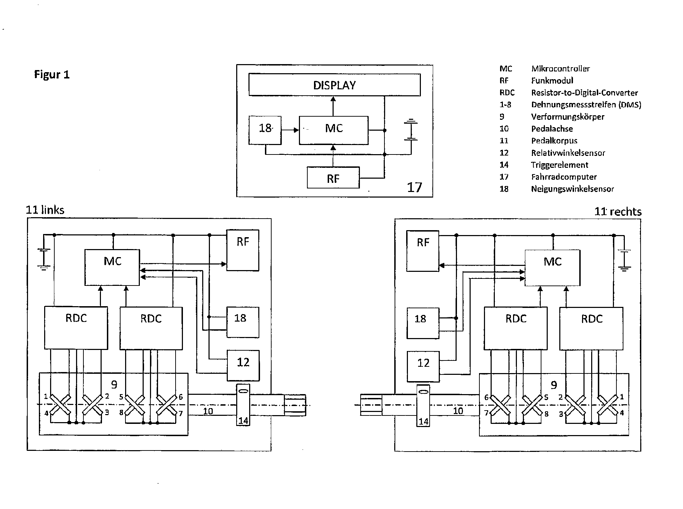

Die Figur 1 zeigt ein Systemschaubild der Ausgestaltung der Signalgewinnung und - verarbeitung für beide Pedale. Linke und rechte sind dabei identisch aufgebaut. Am Fahr-radcomputer 17 kann auch nur ein Messpedal betrieben werden, z.B. als Lowcost-Variante. Es wird die Dehnungsmessung mittels zweier TDC's dargestellt, deren digitalisierte Signale zusammen mit den Signalen des Relativwinkelsensors 12 und dem Neigungswinkelsensor 18 (NW) in einem separaten Mikrocontroller (MC) zusammengeführt, vorverarbeitet und über das RF-Modul (RF) mit einem sehr energiesparenden digitalen Übertragungsprotokoll an den Fahrradcomputer (FC) übermittelt werden.

Die Dehnmessstreifen 1-8 sind extern nicht in Brückenschaltung angeschlossen, sondern einzeln vom TDC vermessbar, was es ermöglicht - wie oben mit den vier Gleichungen gezeigt - durch einfache algebraische Verknüpfung der Dehnungsinformation im Mikrocontroller (MC) alle interessierenden Querkräfte, die Axialkraft und das Verlustmoment an der Pedalachse 10 zu bestimmen. Das Messen der Querkräfte einer Ebene (z.B. vertikal) wird von je einem Dehnmessstreifen-Satz (bestehend aus zwei Dehnmessstreifen-Paaren), z.B. Satz 1-4 vorgenommen, der Dehnmessstreifen-Satz 5-8 misst die Horizontalkomponente. Für die Ermittlung der Axialkraft- und Momenteninformation ist nur die Verknüpfung einer der beiden Dehnmessstreifen-Sätze erforderlich. Es ist auch eine Ausführungsform möglich, in der unter Verzicht auf die Axialkraft- und Verlustmomentinformation ein einzelner TDC genügt.

Der Fahrradcomputer 17 übernimmt dann die Fahrbahnsteigungskorrektur durch den eigenen Neigungswinkel (NW), um später die Darstellung von kurbelwinkelbezogenen Verläufen korrekt zu ermöglichen, führt alle vorgesehenen Berechnungen durch, speichert die ermittelten Daten und zeigt ausgewählte im Display an, beispielsweise momentane Gesamtleistung, Leistungs- und/oder Kraftbilanzen links/rechts, usw. Sofern weitere Auswertungen am PC vorgesehen sind, überträgt das RF die Daten an eine PC-Schnittstelle.

**Bezugszeichenliste**

1 Dehnmessstreifen Nr. 1
2 Dehnmessstreifen Nr. 2
3 Dehnmessstreifen Nr. 3
4 Dehnmessstreifen Nr. 4
5 Dehnmessstreifen Nr. 5
6 Dehnmessstreifen Nr. 6
7 Dehnmessstreifen Nr. 7
8 Dehnmessstreifen Nr. 8
9 Verformungskörper (VK)
10 Pedalachse (PA)
11 Pedalkorpus (PK)
12 Winkelgeber, Relativwinkelsensor (RW)
13 Lager
14 Triggerelement (TE)
15 Indexstift (IS), Justierhilfe

16   Pedal
17   Auswertegerät, insbesondere ein Fahrradcomputer (FC)
18   Neigungswinkelsensor (NW)
19   Fixierschraube (FS)
20   Kurbel
21   Nullpunkt-Trigger

**Patentansprüche**

1.  Vorrichtung zur Messung und Ermittlung der Kraft, der Momente und der Leistung an einer Kurbel, insbesondere der eines Fahrrades, bestehend aus einem Auswertegerät (17), insbesondere einem Fahrradcomputer (FC), und wenigstens einem Pedal (16), wobei die Größen Kraft und Winkelgeschwindigkeit in elektrische Signale umgewandelt und einem Auswertegerät (17), insbesondere einem Fahrradcomputer (FC), zugeführt werden, wobei das Pedal (16) aus einem Pedalkorpus (11), einem Verformungskörper (9) und einer Pedalachse (10) besteht **dadurch gekennzeichnet, dass** das Pedal weiterhin aus einem Relativwinkelsensor (12) besteht, dass der Verformungskörper (9) fest mit dem Pedalkorpus (11) verbunden und drehbar auf der Pedalachse (10) angeordnet ist, dass die Größe Kraft durch Messung der Verformung des Verformungskörpers (9) mit Dehnmessstreifen durch Messung der Einzelnormaldehnungen der Dehnmessstreifen ermittelt wird, wobei vier Paare Dehnmessstreifen (1 und 2; 3 und 4; 5 und 6; 7 und 8) in unterschiedlichem Winkel, vorzugsweise von +/- 45 °, zur Pedalachse (10) angeordnet sind und dass die Umwandlung der Größe Kraft von den Dehnmessstreifen in elektrische Signale mittels Zeit-Digital-Wandler (TDC) erfolgt.

2.  Vorrichtung nach Anspruch 1, **dadurch gekennzeichnet, dass** das Pedal (16) sowie das Auswertegerät (17) jeweils einen Neigungswinkelsensor (18) aufweist.

3.  Vorrichtung nach Anspruch 1 oder 2, **dadurch gekennzeichnet, dass** die Ermittlung des Pedalkraftverlaufs ($F_z$, $F_y$, $F_x$), d.h. der Pedalkräfte in den drei Raumrichtungen ($F_z$, $F_y$, $F_x$), als Funktion über den Kurbelwinkel ($\alpha$) erfolgt.

4.  Vorrichtung nach Anspruch 1 bis 3, **dadurch gekennzeichnet, dass** alle Messdaten drahtlos an das Auswertegerät (17), insbesondere an einen Fahrradcomputer (FC), übertragen werden.

5.  Vorrichtung nach Anspruch 1 bis 4, **dadurch gekennzeichnet, dass** über das Pedal (16) die Ermittlung der Torsionsmomente ($M_x$), beispielsweise der Verlustmomente infolge Reibung, an der Pedalachse (10), erfolgt.

6.  Vorrichtung nach Anspruch 1 bis 5, **dadurch gekennzeichnet, dass** in dem Auswertegerät (17) mit den Messdaten der Kraftkomponenten in allen Raumrichtungen ($F_z$, $F_y$, $F_x$) aus dem Pedal (16) Fahrstile, z.B. Wiegetritt, Sprint oder Abfahrt, identifiziert werden können und mit im Auswertegerät (17) abgespeicherten Fahrstilen verglichen werden können.

7.  Vorrichtung nach Anspruch 1 bis 6, **dadurch gekennzeichnet, dass** das Auswertegerät (17) die Fahrbahnneigung ($\sigma_{FC}$) ermittelt und damit eine Nachkalibrierung der Messdaten erfolgt.

8.  Vorrichtung nach Anspruch 1 bis 7, **dadurch gekennzeichnet, dass** das Pedal (16), eine mechanisch einstellbare Winkelnullpunktstellung aufweist.

9.  Vorrichtung nach Anspruch 1 bis 8, **dadurch gekennzeichnet, dass** eine Justierhilfe (15) auch gleichzeitig eine Transportsicherung ist.

10. Vorrichtung nach Anspruch 1 bis 9, **dadurch gekennzeichnet, dass** Erfassung der Messdaten vom linken und rechten Pedal (16) eines Fahrrades erfolgt.

11. Vorrichtung nach Anspruch 1 bis 10, **dadurch gekennzeichnet, dass** im Auswertegerät (17) Auswertung, Vergleich und Anzeige der Leistungsmessung vom linken und rechten Pedal (16) getrennt erfolgen.

12. Vorrichtung nach Anspruch 2 bis 11, **dadurch gekennzeichnet, dass** die Ermittlung des Kurbelwinkels ($\alpha$) und der Kurbelwinkelgeschwindigkeit (d$\alpha$/dt) aus einem Relativwinkel ($\Delta\varphi$), gemessen mit dem Relativwinkelsensor (12), und einem Wippwinkel ($\beta$), gemessen über den Neigungswinkelsensor (18) und einem weiteren ortsfesten Neigungswinkelsensor, z.B. im Fahrradcomputer (17) integriert, zur Ermittlung der Fahrbahnsteigung $\sigma_{FC}$ als Korrekturwinkel, erfolgt.

**13.** Vorrichtung nach Anspruch 1 bis 12, **dadurch gekennzeichnet, dass** die Ermittlung der Pedalkräfte in den drei Raumrichtungen ($F_z$, $F_y$, $F_x$) und des Torsionsmoments ($M_x$), insbesondere des Verlustmoments infolge Reibung, über eine Verknüpfung der gemessenen Einzel-Normaldehnungen an dem Verformungskörper (9) erfolgt.

**14.** Vorrichtung nach Anspruch 1 bis 13, **dadurch gekennzeichnet, dass** die Messung der Normaldehnungen mittels unter 45° zur Pedalachse (10) applizierten Dehnmessstreifenpaaren am Verformungskörper (9) in zwei senkrecht aufeinander stehenden Richtungen erfolgt.

**15.** Vorrichtung nach Anspruch 1 bis 14, **dadurch gekennzeichnet, dass** ein Relativwinkel ($\Delta\varphi$) aus einem Laufzeitsignal bestimmt wird, das durch Überfahren des Relativwinkelsensors (12) von mindestens einem Triggerpunkt, beispielsweise dem Nulltriggerpunkt (21), auf einem Triggerelement (14) gemessen wird, wobei eine Messung des Relativwinkels ($\Delta\varphi$) zwischen dem Pedalkorpus (11) und der Pedalachse (10) über die Laufzeit ($\Delta t$) und die Winkelgeschwindigkeit ($\omega_{i-1}$) der letzten halben Umdrehung erfolgt.

**16.** Vorrichtung nach Anspruch 1 bis 15, **dadurch gekennzeichnet, dass** die Ermittlung der Radial- und Tangential-Komponenten ($F_R$, $F_T$) der Kurbelkraft und die resultierende Kraft ($F_{TR}$) mit Wirkwinkel ($\varphi_{TR}$) mittels des Pedalkraftverlaufs ($F_z$, $F_y$, $F_x$) erfolgt.

**17.** Vorrichtung nach Anspruch 1 bis 16, **dadurch gekennzeichnet, dass** die Messung der Axialkraft ($F_x$) und des Torsionsmoments ($M_x$), insbesondere des Verlustmoments infolge Reibung, mit nur zwei Dehnmessstreifenpaaren (1 und 2; 3 und 4) am Verformungskörper (9) erfolgt.

## Claims

**1.** An apparatus for measuring and determining the force, the torque and the power on a crank, in particular of a bicycle, consisting of an evaluation device (17), in particular a bicycle computer (FC), and at least one pedal (16), wherein the force and angular velocity variables are converted into electrical signals and fed to an evaluation device (17), in particular a bicycle computer (FC), wherein the pedal (16) consists of a pedal body (11), a deformation element (9) and a pedal shaft (10), **characterized in that** the pedal further consists of a relative angle sensor (12), that the deformation element (9) is fixedly connected to the pedal body (11) and is arranged on the pedal shaft (10) such that it can rotate, that the force variable is determined by measuring the deformation of the deformation element (9) with strain gauges by measuring the individual normal strains of the strain gauge, wherein four pairs of strain gauges (1 and 2; 3 and 4; 5 and 6; 7 and 8) are arranged at different angles, preferably of +/-45°, to the pedal shaft (10), and that the force variable is converted into electrical signals by the strain gauge by means of time-to-digital converters (TDC).

**2.** The apparatus according to Claim 1, **characterized in that** the pedal (16) and the evaluation device (17) each have a tilt angle sensor (18).

**3.** The apparatus according to Claim 1 or 2, **characterized in that** the pedal force curve ($F_z$, $F_y$, $F_x$), i.e. the pedal forces in the three spatial directions ($F_z$, $F_y$, $F_x$), is determined as a function of the crank angle ($\alpha$).

**4.** The apparatus according to Claims 1 to 3, **characterized in that** all measurement data are transferred wirelessly to the evaluation device (17), in particular to a bicycle computer (FC).

**5.** The apparatus according to Claims 1 to 4, **characterized in that** the torsional moments ($M_x$), for example, the loss moments due to friction, on the pivot shaft (10) are determined via the pedal (16).

**6.** The apparatus according to Claims 1 to 5, **characterized in that** with the measured data of the force components from the pedal (16) in all directions in space ($F_z$, $F_y$, $F_x$), riding styles, e.g. riding out of the saddle, sprinting or downhill, can be identified in the evaluation device (17) and can be compared with riding styles stored in the evaluation device (17).

**7.** The apparatus according to Claims 1 to 6, **characterized in that** the evaluation device (17) determines the track

incline ($\sigma_{FC}$) and a recalibration of the measured data thereby takes place.

8. The apparatus according to Claims 1 to 7, **characterized in that** the pedal (16) has a mechanically adjustable angular zero point position.

9. The apparatus according to Claims 1 to 8, **characterized in that** an adjustment tool (15) is simultaneously a transport locking device.

10. The apparatus according to Claims 1 to 9, **characterized in that** the measurement data are captured from the left and right pedal (16) of a bicycle.

11. The apparatus according to Claims 1 to 10, **characterized in that** evaluation, comparison and display of the power measurement from the left and right pedal (16) are performed separately in the evaluation device (17).

12. The apparatus according to Claims 2 to 11, **characterized in that** the crank angle ($\alpha$) and the crank angular velocity ($d\alpha/dt$) are determined from a relative angle ($\Delta\varphi$), measured with relative angle sensor (12), and a tilt angle ($\beta$), measured via the tilt angle sensor (18) and a further fixed tilt angle sensor, e.g. integrated in the bicycle computer (17), to determine the track incline $\sigma_{FC}$ as a correction angle.

13. The apparatus according to Claims 1 to 12, **characterized in that** the pedal forces in the three spatial directions ($F_z$, $F_y$, $F_x$) and the torsion moment ($M_x$), in particular the loss moment due to friction, are determined by combining the individual normal strains measured at the deformation element (9).

14. The apparatus according to Claims 1 to 13, **characterized in that** the normal strains are measured using strain gauge pairs on the deformation element (9) applied at less than 45° to the pedal shaft (10) in two directions perpendicular to each other.

15. The apparatus according to Claims 1 to 14, **characterized in that** a relative angle ($\Delta\varphi$) is determined from a transit time signal that is measured by the relative angle sensor (12) passing over at least one trigger point, for example the zero trigger point (21), on a trigger element (14), wherein the relative angle ($\Delta\varphi$) between the pedal body (11) and the pedal shaft (10) is measured using the transit time ($\Delta t$) and the angular velocity ($\omega_{i-1}$) of the last half revolution.

16. The apparatus according to Claims 1 to 15, **characterized in that** the radial and tangential components ($F_R$, $F_T$) of the crank force and the resultant force ($F_{TR}$) with effective angle ($\varphi_{TR}$) are determined by means of the pedal force curve ($F_z$, $F_y$, $F_x$).

17. The apparatus according to Claims 1 to 16, **characterized in that** the axial force ($F_x$) and the torsional moment ($M_x$), and in particular the loss moment due to friction, are measured on the deformation element (9) with only two strain gauge pairs (1 and 2; 3 and 4).

**Revendications**

1. Dispositif pour mesurer et déterminer la force, les couples et la puissance sur une manivelle, en particulier celle d'une bicyclette, composé d'un appareil d'évaluation (17), en particulier d'un ordinateur de bicyclette (FC) et au moins d'une pédale (16), pour lequel les valeurs de force et de vitesse angulaire sont transformées en signaux électriques et sont acheminées vers un appareil d'évaluation (17) en particulier un ordinateur de bicyclette (OB), pour lequel la pédale (16) est composée d'un corps de pédale (11), d'un corps de déformation (9) et d'un axe de pédale (10) **caractérisé en ce que** la pédale est en outre composée d'un capteur d'angle relatif (12), **en ce que** le corps de déformation (9)est relié fermement au corps de pédale (11) et est disposé tournant sur l'axe de pédale (10), **en ce que** la valeur de force est déterminée par la mesure de la déformation du corps de déformation (9) avec un extensomètre par mesure des extensions normales individuelles de l'extensomètre, pour lequel quatre paires d'extensomètres (1 et 2; 3 et 4 ; 5 et 6; 7 et 8) sont disposées à un angle différent, de préférence de +/- 45° par rapport à l'axe de pédale (10) et **en ce que** la conversion de la valeur de force des extensomètres a lieu en signaux électriques au moyen d'un convertisseur temps-numérique (TDC).

2. Dispositif selon la revendication 1 **caractérisé en ce que** la pédale (16) ainsi que l'appareil d'évaluation (17) présentent respectivement un capteur d'angle d'inclinaison (18).

**3.** Dispositif selon la revendication 1 ou 2 **caractérisé en ce que** la détermination du profil de la force de la pédale ($F_z$, $F_y$, $F_x$), c.-à-d. des forces de pédale dans les trois directions spatiales ($F_z$, $F_y$, $F_x$) a lieu en tant que fonction par l'angle de manivelle ($\alpha$).

**4.** Dispositif selon la revendication 1 à 3 **caractérisé en ce que** tous les données de mesure sont transmises sans fil à l'appareil d'évaluation (17), en particulier à un ordinateur de bicyclette (FC).

**5.** Dispositif selon la revendication 1 à 4 **caractérisé en ce que** par la pédale (16), la détermination des couples de torsion ($M_x$), par exemple des couples de perte en raison du frottement, a lieu sur l'axe de pédale (10).

**6.** Dispositif selon la revendication 1 à 5 **caractérisé en ce que** dans l'appareil d'évaluation (17) on peut, avec les données de mesure des composantes de force dans toutes les directions spatiales ($F_z$, $F_y$, $F_x$) à partir de la pédale (16), identifier les styles de circulation, en danseuse, sprint, ou descente et on peut les comparer aux styles de circulation mémorisés dans l'appareil d'évaluation (17).

**7.** Dispositif selon la revendication 1 à 6 **caractérisé en ce que** l'appareil d'évaluation (17) détermine l'inclinaison de la chaussée ($\sigma_{OB}$) et qu'ainsi un réétalonnage des données de mesure a lieu.

**8.** Dispositif selon la revendication 1 à 7 **caractérisé en ce que** la pédale (16) présente une position angulaire zéro mécaniquement réglable.

**9.** Dispositif selon la revendication 1 à 8 **caractérisé en ce qu'**une assistance de réglage (15) est également en même temps une sécurité de transport.

**10.** Dispositif selon la revendication 1 à 9 **caractérisé en ce que** la saisie des données de mesure de la pédale gauche et droite (16) d'une bicyclette a lieu.

**11.** Dispositif selon la revendication 1 à 10 **caractérisé en ce que** dans l'appareil d'évaluation (17) a lieu séparément l'évaluation, la comparaison et l'affichage de la mesure de puissance de la pédale gauche et droite (16).

**12.** Dispositif selon la revendication 2 à 11 **caractérisé en ce que** la détermination de l'angle de manivelle ($\alpha$) et de la vitesse angulaire de manivelle ($d\alpha/dt$) a lieu à partir d'un angle relatif ($\Delta\varphi$), mesuré avec le capteur d'angle relatif (12) et un angle de bascule ($\beta$), mesuré par le capteur d'angle d'inclinaison (18) et d'un autre capteur d'angle d'inclinaison fixe, par ex.: intégré dans l'ordinateur de bicyclette (17), pour déterminer l'inclinaison de la chaussée $\sigma_{OB}$ en tant qu'angle de correction.

**13.** Dispositif selon la revendication 1 à 12 **caractérisé en ce que** la détermination des forces de pédale dans les trois directions spatiales ($F_z$, $F_y$, $F_x$) et du couple de torsion ($M_x$), en particulier du couple de perte en raison du frottement, a lieu par une association des extensions normales individuelles mesurées sur le corps de déformation (9).

**14.** Dispositif selon la revendication 1 à 13 **caractérisé en ce que** la mesure des extensions normales a lieu au moyen de paires d'extensomètres appliquées à 45° par rapport à l'axe de pédale (10) sur le corps de déformation (9) dans deux directions perpendiculairement superposées.

**15.** Dispositif selon la revendication 1 à 14 **caractérisé en ce qu'**un angle relatif ($\Delta\varphi$) est défini à partir d'un signal de durée, qui est mesuré par passage du capteur d'angle relatif (12) d'au moins un point de déclenchement, par exemple du point de déclenchement zéro (21), sur un élément de déclenchement (14), pour lequel une mesure de l'angle relatif ($\Delta\varphi$) entre le corps de pédale (11) et l'axe de pédale (10) a lieu sur la durée ($\Delta t$) et la vitesse angulaire ($\omega_{i-1}$) du dernier demi tour.

**16.** Dispositif selon la revendication 1 à 15 **caractérisé en ce que** la détermination des composants radiaux et tangentiels ($F_R$, $F_T$) de la force de manivelle et la force résultante ($F_{TR}$) avec l'angle actif ($\varphi_{TR}$) a lieu au moyen du profil de la force de la pédale ($F_z$, $F_y$, $F_x$).

**17.** Dispositif selon la revendication 1 à 16 **caractérisé en ce que** la mesure de la force axiale ($F_x$) et du couple de torsion ($M_x$), en particulier du couple de perte en raison du frottement, a lieu avec seulement deux paires d'extensomètres (1 et 2 ; 3 et 4) sur le corps de déformation (9).

**Figur 1**

| MC | Mikrocontroller |
|---|---|
| RF | Funkmodul |
| RDC | Resistor-to-Digital-Converter |
| 1-8 | Dehnungsmessstreifen (DMS) |
| 9 | Verformungskörper |
| 10 | Pedalachse |
| 11 | Pedalkorpus |
| 12 | Relativwinkelsensor |
| 14 | Triggerelement |
| 17 | Fahrradcomputer |
| 18 | Neigungswinkelsensor |

**Figur 2**

**Figur 3**

Figur 4

**Figur 5**

**Figur 6**

**Figur 7**

**Figur 8**

Zugewandte Seite    Abgewandte Seite

**Figur 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3722728 C1
- US 20070170688 A1
- EP 0909940 A2
- EP 0954746 B1
- US 7377180 B2
- US 7387029 B2
- DD 294673 A5